# FASCICULE DE BREVET EUROPEEN

(11) **EP 2 307 261 B1**
(45) Date de publication et mention de la délivrance du brevet: **07.12.2011**
(21) Numéro de dépôt: 09794020.9
(22) Date de dépôt: 23.06.2009
(51) Int. Cl.: B62D 15/02, B62D 5/04

(54) **SYSTEME DE DIRECTION ASSISTEE ELECTRIQUE DE VEHICULE AUTOMOBILE**
ELEKTRISCHES SERVOLENKSYSTEM EINES MOTORFAHRZEUGS
MOTOR VEHICLE ELECTRIC POWER ASSISTED STEERING SYSTEM

(30) Priorité: 07.07.2008 FR 0803853
(43) Date de publication de la demande: 13.04.2011
(73) Titulaire: JTEKT Europe, 69540 Irigny (FR)
(72) Inventeur: CASSAR, Stéphane, F-69300 Caluire (FR); HERAULT, Sébastien, F-69008 Lyon (FR); KASBARIAN, Jean-Marc, F-69007 Lyon (FR); PILAZ, Pierre, F-69170 Saint Marcel L'eclaire (FR); MOULAIRE, Pascal, F-42300 Roanne (FR)
(74) Mandataire: Chevalier, Renaud Philippe
(86) Numéro de dépôt international: PCT/FR2009/051195
(87) Numéro de publication internationale: WO 2010/004160

(56) Documents cités:
- EP-A- 1 550 839
- EP-A- 1 627 799

## Description

La présente invention concerne un système de direction assistée de véhicule automobile, et plus précisément un système de direction assistée électrique, comprenant un moteur électrique d'assistance et des moyens électroniques de traitement agencés pour piloter le moteur électrique d'assistance, notamment en fonction de signaux électriques issus de capteurs.

Dans ce contexte, l'invention s'intéresse plus spécialement à la prise en compte de signaux qui contribuent à la détermination de l'angle de braquage, notamment dans l'instant qui suit le démarrage d'un véhicule automobile se trouvant, précédemment à l'arrêt.

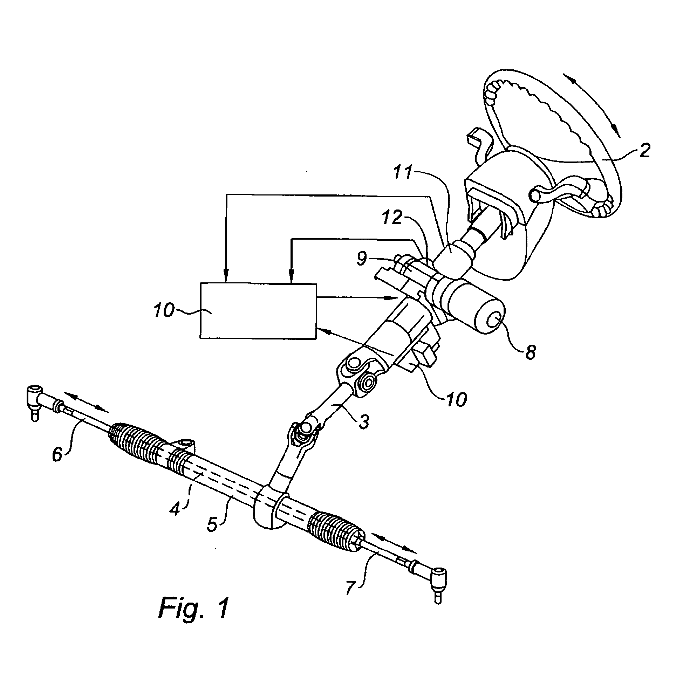

La figure 1 du dessin schématique annexé rappelle quels sont les principaux éléments composant habituellement un système de direction assistée électrique de véhicule. Un tel système de direction comprend, d'une part, une partie mécanique comprenant un volant de conduite 2 lié en rotation à une colonne de direction 3, dont l'extrémité éloignée du volant 2 porte un pignon de direction en prise avec une crémaillère 4, montée coulissante dans un carter de direction 5. Les deux extrémités opposées de la crémaillère 4 sont respectivement liées, par l'intermédiaire de biellettes 6 et 7, aux roues directrices droite et gauche (non représentées) du véhicule. La direction comprend, pour assister l'effort manuel exercé par le conducteur du véhicule sur le volant 2, un moteur électrique d'assistance 8 à deux sens de rotation. L'arbre de sortie du moteur électrique 8 est accouplé, par l'intermédiaire d'un réducteur de vitesse 9 notamment à vis sans fin et roue tangente ou à train d'engrenages, à la colonne de direction 3 ou au pignon de direction ou à la crémaillère 4 directement, de manière à transmettre un couple moteur (éventuellement aussi un couple résistant) au système de direction. Le moteur électrique d'assistance 8 est piloté par un calculateur électronique embarqué 10, qui reçoit et traite divers signaux électriques, en provenance de capteurs.

Dans une réalisation habituelle, le calculateur électronique 10 reçoit notamment un signal électrique issu d'un capteur de couple 11 placé sur la colonne de direction 3, et mesurant ainsi le couple exercé par le conducteur sur le volant 2, et aussi un signal électrique issu d'un capteur de vitesse 12 du véhicule.

A partir de ces diverses informations, le calculateur électronique 10 pilote le moteur électrique d'assistance 8, en définissant à tout moment un couple ou un effort d'assistance, pouvant amplifier ou au contraire compenser l'effort appliqué par le conducteur sur le volant 2, selon des "lois d'assistance" prédéfinies.

Il doit être noté que certains systèmes de direction calculent ou mesurent la position instantanée du moteur électrique d'assistance 8.

Il doit aussi être noté que certains véhicules automobiles sont équipés d'un capteur d'angle de braquage qui peut être intégré dans le système de direction, ou bien placé sur la colonne de direction par exemple. La particularité de tels capteurs est leur capacité à fournir une information d'angle absolue et disponible dès le démarrage de la voiture. L'implantation de ces capteurs est cependant pénalisante en termes de masse, de volume et de coût.

Pour réduire les inconvénients de ces capteurs en termes de masse, de volume et de coût, certains systèmes de direction actuels sont équipés de capteurs simplifiés, qui donnent un signal ponctuel ou « top » pour certaines positions angulaires du système de direction, notamment à chaque tour du pignon de direction. De tels capteurs sont aussi désignés parfois comme capteurs « index ».

A titre d'illustration de cet état de la technique, il est fait référence au document de brevet EP 1550839 A1.

Il doit encore être noté que certains systèmes de direction doivent proposer des fonctions de braquage automatisé, telles que la fonction parking automatique, ou de limitation d'angle de braquage automatisé par exemple. Ces fonctions ont besoin de connaître l'angle de braquage pour fonctionner. De plus, ces fonctions doivent être actives à l'arrêt du véhicule, dans l'instant qui suit le démarrage du véhicule. Actuellement, les systèmes de direction équipés simplement de capteurs de type « index » ne peuvent pas être pourvus de fonctions de braquage automatisé actives à l'arrêt dans l'instant qui suit le démarrage du véhicule, même lorsque le système utilise un moteur électrique d'assistance dont la position instantanée est calculée ou mesurée.

Face à cette situation, la présente invention a pour but de rendre possibles les fonctions de braquage automatisé sur un véhicule automobile à direction assistée électrique équipée d'un simple capteur de type « index », et elle vise plus particulièrement à permettre l'exploitation du signal provenant d'un tel capteur dans l'instant qui suit le démarrage du véhicule, lorsque ces fonctions automatiques interviennent ou dès que le conducteur braque, notamment lorsque le système de direction utilise un moteur électrique d'assistance dont la position instantanée est calculée ou mesurée.

A cet effet, la présente invention a pour objet un système de direction assistée électrique de véhicule automobile, le système comprenant :
- un capteur de mesure de couple de braquage exercé par le conducteur du véhicule,
- un moteur électrique d'assistance prévu pour assister l'effort manuel exercé par le conducteur du véhicule sur le volant de conduite et/ou pour réaliser des manoeuvres de braquage automatisées,
- des moyens de calcul ou de mesure de couple d'assistance délivré par le moteur électrique d'assistance,
- des moyens de calcul ou de mesure de la position angulaire du moteur électrique d'assistance,
- un capteur, dit capteur « index », donnant un signal ponctuel pour certaines positions angulaires du système de direction,
des moyens de traitement agencés pour piloter le moteur électrique d'assistance en fonction des signaux issus des capteurs et/ou autres moyens précités,
ce système de direction assistée électrique étant essentiellement caractérisé par le fait que les moyens de traitement comprennent des moyens de détermination et de prise en compte :
- d'un premier signal d'angle de braquage déterminé en fonction du calcul ou de la mesure de l'effort ou du couple d'assistance délivré par le moteur électrique d'assistance et éventuellement de l'effort ou du couple de braquage exercé par le conducteur sur le volant,
- d'un second signal d'angle de braquage déterminé en fonction du calcul ou de la mesure de la position angulaire du moteur électrique d'assistance,
- d'un troisième signal de type « index » c'est-à-dire émis pour certaines positions angulaires du système de direction,
- d'un signal de convergence des calculs d'angle de braquage, et
- d'un signal de confirmation de calcul de l'angle de braquage,

le signal de convergence étant produit grâce au signal de type « index » pour indiquer un niveau de confiance sur l'estimation de l'angle de braquage.

Ainsi, un premier signal d'angle de braquage est déterminé en fonction de la mesure ou du calcul du couple d'assistance (ou de l'effort d'assistance) exercé par le moteur électrique d'assistance, en tenant compte éventuellement aussi du couple (ou de l'effort) exercé par le conducteur sur le volant. Un second signal d'angle de braquage est déterminé en fonction du signal de mesure de la position du moteur électrique d'assistance. Grâce au signal de type « index », un signal de convergence de calcul des angles de braquage est produit, soit par indentification des conditions de mesure du premier signal d'angle de braquage et /ou du second signal d'angle de braquage, soit par identification avec un modèle pré-établi, fixe ou variable dynamiquement, du premier et/ou du second signal d'angle de braquage. L'angle de braquage exact est alors finalement calculé, en fonction du calcul ou de la mesure de la position angulaire du moteur électrique d'assistance, et du signal de convergence.

L'invention sera bien comprise à l'aide de la description qui suit, en référence au dessin schématique annexé représentant, à titre d'exemple, une forme d'exécution de ce système de direction assistée électrique de véhicule automobile.
Figure 1 (déjà mentionnée) est une vue en perspective, schématisée, d'un système de direction assistée électrique ;
Figure 2 représente, sous la forme de schéma-blocs, les moyens de traitement et notamment de calcul de l'angle de braquage du système de direction objet de l'invention.

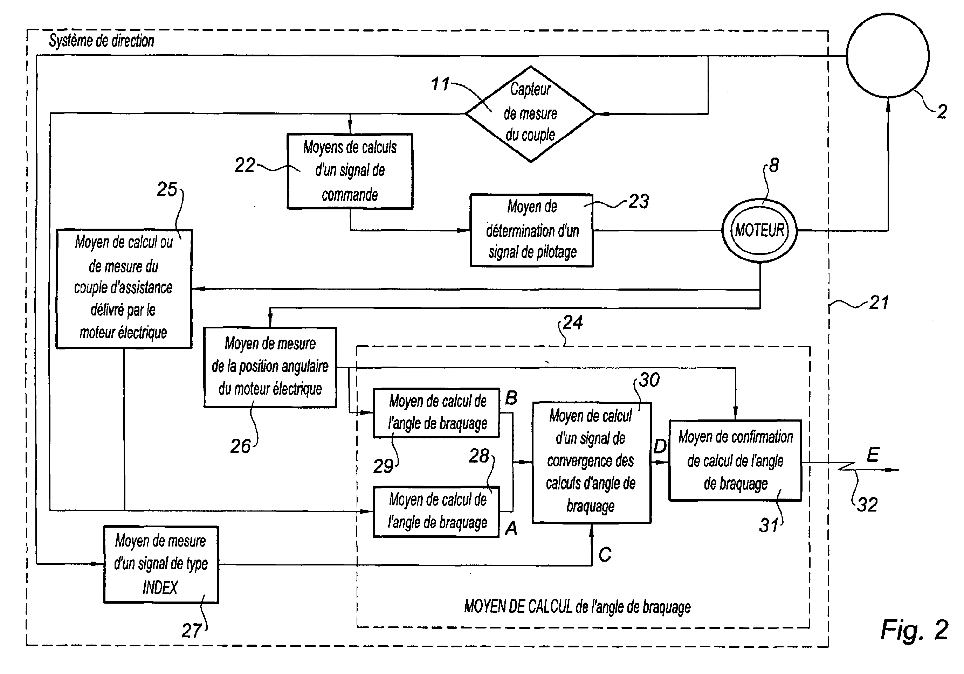

La figure 1 rappelle la structure générale d'un système de direction assistée électrique, en prenant pour exemple une direction dans laquelle le moteur électrique d'assistance 8 est accouplé à la colonne de direction 3 par l'intermédiaire d'un réducteur de vitesse 9. Ce système de direction assistée est aussi symbolisé sur la figure 2, qui indique en 21 (par un cadre rectangulaire en pointillés) l'ensemble de ce système de direction, incluant le moteur électrique d'assistance 8. Le volant de conduite 2 est représenté schématiquement, à l'extérieur du cadre 21.

Un capteur de couple 11 mesure la vitesse exercée par le conducteur sur le volant de conduite 2. Le signal fourni par le capteur de couple 11 est délivré à des moyens de calcul 22 d'un signal de commande, lequel est envoyé à un moyen de détermination 23 d'un signal de pilotage, lui-même dirigé vers le moteur électrique d'assistance 8 (ceci pour rappeler, de façon simplifiée, le principe d'une direction assistée électrique).

La direction assistée électrique 21 comprend encore d'autres moyens de mesure ou de calcul, dont les signaux sont exploités ici dans des moyens spécifiques de calcul 24 de l'angle de braquage, à savoir :
- un moyen de calcul ou de mesure 25 du couple d'assistance délivré par le moteur électrique d'assistance 8 ;
- un moyen de calcul ou de mesure 26 de la position angulaire du moteur électrique d'assistance 8 ;
- un capteur 27 lié à la colonne de direction et fournissant un signal de type « index », par exemple à chaque tour du pignon de direction.

Ces moyens délivrent divers signaux, tous dirigés vers les moyens de calcul 24 de l'angle de braquage.

En particulier, à partir du signal fourni par le moyen de calcul ou de mesure 25 du couple d'assistance délivré par le moteur électrique d'assistance 8, et aussi à partir du signal fourni par le capteur 11 de couple exercé par le conducteur sur le volant 2, un moyen de calcul 28 délivre un premier signal d'angle de braquage A.

Parallèlement, à partir du signal fourni par le moyen de calcul ou de mesure 26 de la position angulaire du moteur électrique d'assistance 8, un moyen de calcul 30 délivre un deuxième signal d'angle de braquage B.

Les signaux A et B sont amenés à un moyen de calcul 30 d'un signal de convergence D des calculs d'angle de braquage, le moyen de calcul 30 recevant aussi le signal C issu du capteur 27, c'est-à-dire le signal de type « index » précédemment mentionné.

La sortie du moyen de calcul 30 d'un signal de convergence D est reliée à une entrée d'un moyen de confirmation 31 de calcul de l'angle de braquage, qui reçoit aussi le signal B issu du moyen de calcul ou de mesure 26 de la position angulaire du moteur électrique 8, et qui délivre un signal de confirmation E. Enfin, la sortie 32 du moyen de confirmation 31 est reliée à l'application envisagée.

En particulier, grâce au capteur 27 de type « index », le système fournit, dans l'instant qui suit le démarrage du véhicule, une information fiable exploitable par une fonction de braquage automatisé.

On notera que la prise en compte de l'effort ou du couple de braquage exercé par le conducteur reste facultative et que la détermination du signal de convergence peut être réalisée de diverses autres manières ; par ailleurs l'invention reste applicable quel que soit le point d'action du moteur électrique d'assistance, lequel peut se situer sur la colonne de direction ou sur le pignon de direction ou encore sur la crémaillère.

## Revendications

1. Système de direction assistée électrique de véhicule automobile, le système comprenant :
- un capteur (11) de mesure de couple de braquage exercé par le conducteur du véhicule,
- un moteur électrique d'assistance (8) prévu pour assister l'effort manuel exercé par le conducteur du véhicule sur le volant de conduite (2) et/ou pour réaliser des manoeuvres de braquage automatisées,
- des moyens de calcul ou de mesure (23) du couple d'assistance délivré par le moteur électrique d'assistance (8),
- des moyens de calcul ou de mesure (24) de la position angulaire du moteur électrique d'assistance (8),
- un capteur (27), dit capteur « index », donnant un signal ponctuel pour certaines positions angulaires du système de direction (21),
- des moyens de traitement agencés pour piloter le moteur électrique d'assistance (8) en fonction des signaux issus des capteurs et/ou autres moyens précités,
**caractérisé en ce que** les moyens de traitement comprennent des moyens (24) de détermination et de prise en compte :
- d'un premier signal d'angle de braquage (A) déterminé en fonction du calcul ou de la mesure de l'effort ou du couple d'assistance délivré par le moteur électrique d'assistance (8) et éventuellement de l'effort ou du couple de braquage exercé par le conducteur sur le volant (2),
- d'un second signal d'angle de braquage (B) déterminé en fonction du calcul ou de la mesure de la position angulaire du moteur électrique d'assistance (8),
- d'un troisième signal (C) de type « index » c'est-à-dire émis pour certaines positions angulaires du système de direction (21),
- d'un signal de convergence (D) des calculs d'angle de braquage, et
- d'un signal de confirmation (E) de calcul de l'angle de braquage,
le signal de convergence (D) étant produit grâce au signal (C) de type « index » pour indiquer un niveau de confiance sur l'estimation de l'angle de braquage.

2. Système de direction assistée électrique selon la revendication 1, **caractérisé en ce que** le signal de convergence (D) des calculs d'angle de braquage est produit par indentification des conditions de mesure du premier signal d'angle de braquage (A) et /ou du second signal d'angle de braquage (B).

3. Système de direction assistée électrique selon la revendication 1, **caractérisé en ce que** le signal de convergence (D) des calculs d'angle de braquage est produit par indentification avec un modèle pré-établi, fixe ou variable dynamiquement, du premier et/ou du second signal (A, B) d'angle de braquage.

## Claims

1. Motor vehicle electric power assisted steering system, the system comprising:
- a sensor (11) for measuring the steering torque exerted by the driver of the vehicle,
- an electric assistance motor (8) provided for assisting the manual force exerted by the driver of the vehicle on the steering wheel (2) and/or for carrying out automated steering manoeuvres,
- means (23) for calculating or measuring the assistance torque delivered by the electric assistance motor (8),
- means (24) for calculating or measuring the angular position of the electric assistance motor (8),
- a sensor (27), known as an "index" sensor, giving a point signal for certain angular positions of the steering system (21),
- processing means for controlling the electric assistance motor (8) as a function of the signals coming from the sensors and/or other aforementioned means,
**characterised in that** the processing means comprise means (24) for determining and taking into account:
- a first steering angle signal (A) determined as a function of the calculation or measurement of the assistance force or torque delivered by the electric assistance motor (8) and optionally of the steering force or torque exerted by the driver on the steering wheel (2),
- a second steering angle signal (B) determined as a function of the calculation or measurement of the angular position of the electric assistance motor (8),
- a third signal (C) of "index" type, that is to say emitted for certain angular positions of the steering system (21),
- a convergence signal (D) for the steering angle calculations, and
- a confirmation signal (E) for confirming the calculation of the steering angle,
the convergence signal (D) being produced by virtue of the signal (C) of "index" type so as to indicate a level of confidence regarding the estimate of the steering angle.

2. Electric power assisted steering system according to claim 1, **characterised in that** the convergence signal (D) of the steering angle calculations is produced by identifying the measurement conditions of the first steering angle signal (A) and/or of the second steering angle signal (B).

3. Electric power assisted steering system according to claim 1, **characterised in that** the convergence signal (D) for the steering angle calculations is produced by identifying, using a pre-established fixed or dynamically variable model, the first and/or second steering angle signal (A, B).

## Patentansprüche

1. Elektrisches Servolenksystem eines Kraftfahrzeugs, wobei das System umfasst:
- einen Sensor (11) zum Messen des vom Kraftfahrer ausgeübten Lenkdrehmoments,
- einen elektrischer Hilfsmotor (8), der vorgesehen ist, um die manuelle Kraft, die vom Kraftfahrer auf das Lenkrad (2) ausgeübt wird, zu unterstützen und/oder um automatisierte Lenkmanöver durchzuführen,
- Mittel zum Berechnen oder Messen (23) des von dem elektrischen Hilfsmotor (8) bereitgestellten Unterstützungsmoments,
- Mittel zum Berechnen oder Messen (24) der Winkelposition des elektrischen Hilfsmotors (8),
- einen als Indexsensor bezeichneten Sensor (27), der ein punktuelles Signal für bestimmte Winkelpositionen des Lenksystems (21) gibt,
- Verarbeitungsmittel, die ausgebildet sind, um den elektrischen Hilfsmotor (8) in Abhängigkeit von den Signalen, die von den Sensoren ausgegeben werden, und/oder andere vorgenannte Mittel zu steuern,
**dadurch gekennzeichnet, dass** die Verarbeitungsmittel Mittel (24) zur Bestimmung und Berücksichtigung umfassen:
- eines ersten Lenkwinkelsignals (A), das in Abhängigkeit von der Berechnung oder der Messung der Kraft oder des vom elektrischen Hilfsmotor (8) bereitgestellten Unterstützungsmoments und eventuell von der Kraft oder dem Lenkdrehmoment, ausgeübt vom Kraftfahrer auf das Lenkrad (2), bestimmt wird,
- eines zweiten Lenkwinkelsignals (B), das in Abhängigkeit von der Berechnung oder der Messung der Winkelposition des elektrischen Hilfsmotors (8) bestimmt wird,
- eines dritten Signals (C) vom Typ "Index", das heißt, das für bestimmte Winkelpositionen des Lenksystems (21) ausgegeben wird,
- eines Konvergenzsignal (D) der Lenkwinkelberechnungen, und
- eines Bestätigungssignals (E) der Lenkwinkelberechnung, wobei das Konvergenzsignal (D) dank des Signals (C) vom Typ "Index" produziert wird, um ein Vertrauensniveau für die Abschätzung des Lenkwinkels anzugeben.

2. Elektrisches Servolenksystem nach Anspruch 1, **dadurch gekennzeichnet, dass** das Konvergenzsignal (D) der Lenkwinkelberechnungen durch Identifizierung der Messbedingungen des ersten Lenkwinkelsignals (A) und/oder des zweiten Lenkwinkelsignals (B) erzeugt wird.

3. Elektrisches Servolenksystem nach Anspruch 1, **dadurch gekennzeichnet, dass** das Konvergenzsignal (D) der Lenkwinkelberechnungen durch Identifizierung des ersten und/oder zweiten Lenkwinkelsignals (A, B) mit einem vorbestimmten starren oder dynamisch variablen Modell erzeugt wird.
